# EUROPEAN PATENT SPECIFICATION

(11) **EP 1 562 729 B1**
(45) Date of publication and mention of the grant of the patent: **02.04.2008**
(21) Application number: 03769851.1
(22) Date of filing: 17.11.2003
(51) Int. Cl.: B29C 45/14, F16L 37/088

(54) **METHOD AND APPARATUS FOR PRODUCING A RIGHT ANGLE TUBE CONNECTOR**
VERFAHREN UND VORRICHTUNG ZUR HERSTELLUNG EINES RECHTWINKLIGEN STECKANSCHLUSSES FÜR ROHRLEITUNGEN
PROCEDE ET APPAREIL POUR PRODUIRE UN CONNECTEUR DE TUBES A ANGLE DROIT

(30) Priority: 21.11.2002 US 301236
(43) Date of publication of application: 17.08.2005
(73) Proprietor: FTE automotive GmbH, 96106 Ebern (DE)
(72) Inventor: NIX, Richard, A., Ortonville, MI 48462 (US); LEIGH-MONSTEVENS, Keith, Vernon, Rochester Hills, MI 48309 (US); WOODARD, Michael, James, Utica, MI 48317 (US)
(74) Representative: Oppermann, Mark
(86) International application number: PCT/IB2003/005203
(87) International publication number: WO 2004/045826

(56) References cited:
- WO-A-98/00663
- WO-A-03/029715
- US-B1- 6 273 404
- US-B1- 6 287 501

## Description

### BACKGROUND OF THE INVENTION

This invention relates to connectors and more particularly to a method and apparatus for forming a right angle connector on the end of a tube.

Right angle tube connectors are required in a myriad of plumbing scenarios. In a typical prior art right angle connector, a first tubular connector member is fitted onto an open end of a tube, either over the tube or into the tube, and a second tubular connector member is secured at right angles to the first connector member. This procedure is both time consuming and expensive.

Further, document WO 98/00663 A discloses a method and an apparatus for forming a right angle connector utilizing injection moulding of a plastics material. According to this state of the art a preformed inner housing is used which is L-shaped and comprises two open ends. Each end of the inner housing is provided with a retaining groove for accommodating an O-ring. A tubular member is inserted in one end of the inner housing whilst the other end of the inner housing is closed by inserting a mandrel before the injection moulding process takes place in a horizontal-fill vertical clamp injection moulding machine. By the injection moulding process an outer member is formed which completely encases the inner housing and secures the tubular member within the inner housing. During the injection moulding process the O-rings and the mandrel prevent the plastics material from seeping into the inner housing.

### SUMMARY OF THE INVENTION

The object of this invention is to provide an improved method of forming a right angle connector at an end portion of a tube, and an improved mould apparatus for moulding a right angle connector onto the end portion of a tube, by/in which the right angle tube connector can be formed in a simple moulding operation.

This object is solved by the features specified in claim 1, 3, 4, 8, 10 and 11, respectively, which define the invention. Advantageous and appropriate developments of the invention form the subject matter of claims 2, 5 to 7 and 9, respectively.

According to a first aspect of the invention the method of forming a right angle connector at an end portion of a tube includes the steps of:
positioning the tube end portion in a mould cavity of a die assembly of a mould apparatus, the tube end portion having an open end;
positioning an axially extending core in the mould cavity with the axis of the core at a right angle to the axis of the tube end portion, the core having an inboard end;
injecting a molten plastics material into the mould cavity in surrounding relation to the core and the tube end portion; and
removing the core to form a connector fixedly secured to the tube end portion and having a central axial bore communicating with the open end of the tube, extending at a right angle to the central axis of the tube end portion, and conforming to the configuration of the core;
wherein the inboard end of the core is positioned over and seals off the open end of the tube during moulding of the connector.

This methodology provides a simple and inexpensive means of providing a right angle tube connector, in which the inboard end of the core is positioned over and seals off the open end of the tube whereby to preclude the entry of molten plastics material into the open end of the tube during moulding of the connector.

Preferably, the mould apparatus further includes a laterally extending side core which bears against the inboard end of the axial core to maintain the inboard end in firm sealing engagement with the open end of the tube end portion during the moulding of the connector.

According to the first aspect of the invention also provided is a mould apparatus for moulding a right angle connector onto the end portion of a tube, the mould apparatus comprising:
a die assembly defining a central mould cavity having a first portion and a second portion extending at a right angle to the first portion, a first bore opening at an inboard end thereof into the first cavity portion and sized to slidably receive the tube with the tube end portion projecting into the first cavity portion and defining an annular cavity space in surrounding relation to the tube end portion, the tube end portion having an open end, and a second bore extending at a right angle to the first bore and opening at an inboard end thereof into the second cavity portion; and
an axial core slidably received in the second bore and projecting into the second cavity portion to define an annular connector forming cavity space in surrounding relation to the core, the core having an inboard end;
wherein the inboard end of the axial core defines a flat sealing surface adapted to be positioned over and seal the open end of the tube end portion whereby to preclude the entry of molten material into the open end of the tube end portion during the moulding of the connector.

According to a second aspect of the invention the method of forming a right angle connector at an end portion of a tube includes the steps of:
positioning the tube end portion in a mould cavity of a die assembly of a mould apparatus, the tube end portion having an open end;
positioning an axially extending core in the mould cavity with the axis of the core at a right angle to the axis of the tube end portion, the core having an inboard end;
injecting a molten plastics material into the mould cavity in surrounding relation to the core and the tube end portion; and
removing the core to form a connector fixedly secured to the tube end portion and having a central axial bore communicating with the open end of the tube, extending at a right angle to the central axis of the tube end portion, and conforming to the configuration of the core;
wherein the mould apparatus further includes a laterally extending side core which passes through an aperture in the inboard end of the axial core for positioning in the open end of the tube end portion. As a result the inboard end of the side core and the inboard end of the axial core coact to preclude the entry of molten plastics material into the open end of the tube during moulding of the connector.

According to the second aspect of the invention also provided is a mould apparatus for moulding a right angle connector onto the end portion of a tube, the mould apparatus comprising:
a die assembly defining a central mould cavity having a first portion and a second portion extending at a right angle to the first portion, a first bore opening at an inboard end thereof into the first cavity portion and sized to slidably receive the tube with the tube end portion projecting into the first cavity portion and defining an annular cavity space in surrounding relation to the tube end portion, the tube end portion having an open end, and a second bore extending at a right angle to the first bore and opening at an inboard end thereof into the second cavity portion; and
an axial core slidably received in the second bore and projecting into the second cavity portion to define an annular connector forming cavity space in surrounding relation to the core, the core having an inboard end;
wherein the mould apparatus further includes a side core projecting laterally into the mould cavity at a right angle to the axial core and passing through an aperture in the inboard end portion of the axial core for receipt in the open end of the tube end portion. According to a third aspect of the invention the method of forming a right angle connector at an end portion of a tube includes the steps of:
positioning the tube end portion in a mould cavity of a die assembly of a mould apparatus, the tube end portion having an open end;
positioning an axially extending core in the mould cavity with the axis of the core at a right angle to the axis of the tube end portion, the core having an inboard end;
injecting a molten plastics material into the mould cavity in surrounding relation to the core and the tube end portion; and
removing the core to form a connector fixedly secured to the tube end portion and having a central axial bore communicating with the open end of the tube, extending at a right angle to the central axis of the tube end portion, and conforming to the configuration of the core;
wherein the mould apparatus further includes a laterally extending side core which includes a portion abutting against the inboard end of the axial core and a further plug portion extending into the open end of the tube end portion.

According to the third aspect of the invention also provided is a mould apparatus for moulding a right angle connector onto the end portion of a tube, the mould apparatus comprising:
a die assembly defining a central mould cavity having a first portion and a second portion extending at a right angle to the first portion, a first bore opening at an inboard end thereof into the first cavity portion and sized to slidably receive the tube with the tube end portion projecting into the first cavity portion and defining an annular cavity space in surrounding relation to the tube end portion, the tube end portion having an open end, and a second bore extending at a right angle to the first bore and opening at an inboard end thereof into the second cavity portion; and
an axial core slidably received in the second bore and projecting into the second cavity portion to define an annular connector forming cavity space in surrounding relation to the core, the core having an inboard end;
wherein the mould apparatus further includes a side core projecting laterally into the mould cavity at a right angle to the axial core and including a first portion defining a flat surface engaging the inboard end of the axial core and a second plug portion extending into the open end of the tube end portion.

In each of the embodiments involving a side core, the side core is removed following the injection of the molten plastics material and a plug of plastics material is inserted into the aperture in the connector left by the removal of the side core.

Other applications of the present invention will become apparent to those skilled in the art when the following description of the best mode contemplated for practising the invention is read in conjunction with the accompanying drawings.

### BRIEF DESCRIPTION OF THE DRAWINGS

The description herein makes reference to the accompanying drawings wherein like reference numerals refer to like parts throughout the several views, and wherein:
Figure 1 is a plan view of a tube with a right angle connector formed thereon according to the invention;
Figure 2 is a side view of the tube and connector,
Figure 3 is a perspective cross-sectional view of the tube and connector;
Figure 4 is a perspective view of the tube and connector;
Figure 5 is a fragmentary exploded view of a mould assembly utilised in the formation of the right angle connector,
Figure 6 is a fragmentary plan view of the mould assembly;
Figure 7 is a fragmentary perspective view of an axial core utilised in the mould assembly;
Figure 8 is a cross-sectional view of a modified mould assembly.
Figure 9 is a cross-sectional view of a further modified mould assembly;
Figure 10 is a fragmentary perspective view of an axial core utilised in the mould assembly of Figure 9;
Figure 11 is a fragmentary elevational view of the axial core of Figure 10;
Figure 12 is a cross-sectional view of a still further modified mould assembly;
Figure 13 is a fragmentary perspective view of a side core utilised in the mould of assembly of Figure 12;
Figure 14 is a cross-sectional view of a tube and connector formed utilising the mould assembly of Figure 8 or the mould assembly of Figure 9.

### DETAILED DESCRIPTION OF THE PREFERRED EMBODIMENT

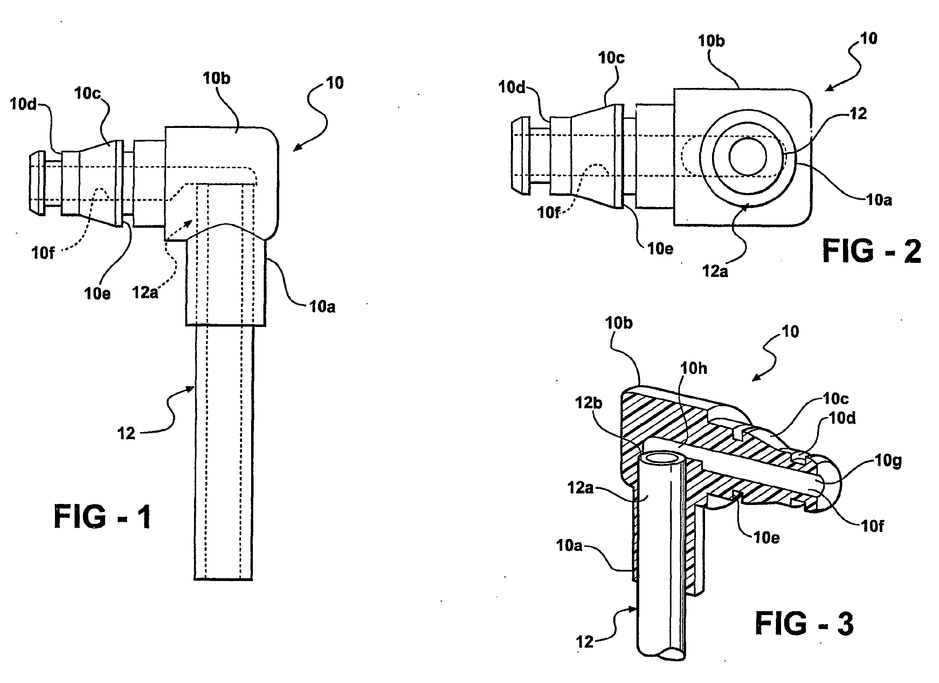

As seen in Figure 1, a connector 10 is formed according to invention in a moulding operation on an open end portion 12a of a tube 12.

With additional reference to Figures 2, 3 and 4, the connector 10 includes a tubular portion 10a telescopically positioned over the tube end portion 12a, a main body portion 10b, and a fitting portion 10 extending at a right angle to tubular portion 10a. It will be understood that fitting portion 10c is arranged to fit telescopically within a port defined in an apparatus to which it is desired to deliver fluid through the tube 12 and, in known manner, includes a groove 10d for receipt of an O-ring and a further groove 10e for receipt of a suitable clip whereby to fixedly secure the fitting portion 10c to the apparatus defining the port.

A central, axially extending bore 10f is defined in fitting portion 10c and in main body portion 10b. Bore 10f includes a main body portion 10g and a reduced diameter, relatively flat portion 10h positioned in overlying relation to the open end of the tube end portion 12a. The central axis of bore 10f will be seen to be disposed at a right angle to the central axis of the tube 12 so that the connector 10 forms a right angle connector with respect to the tube 12.

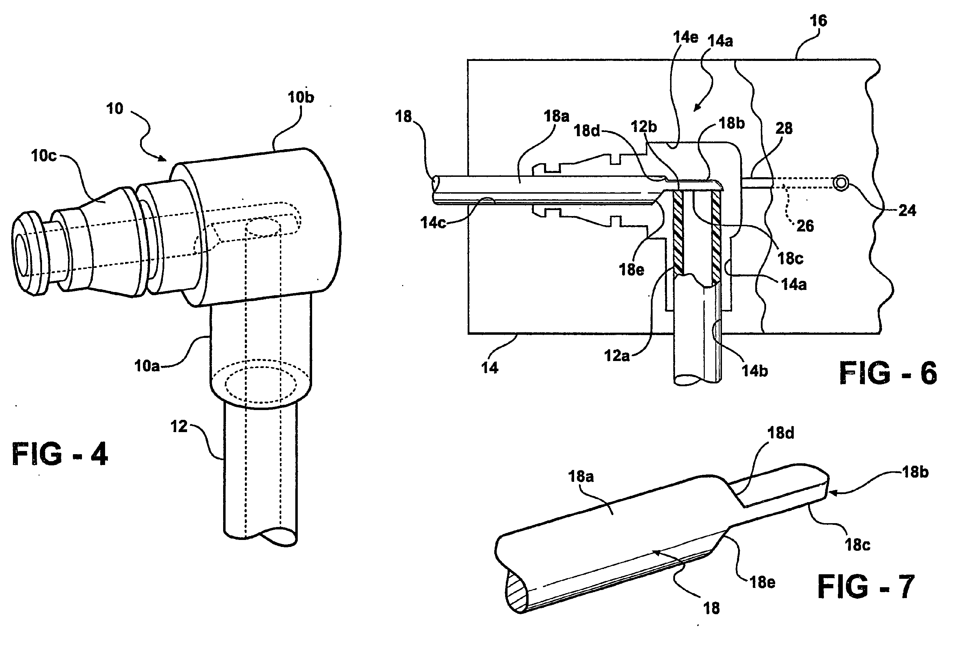

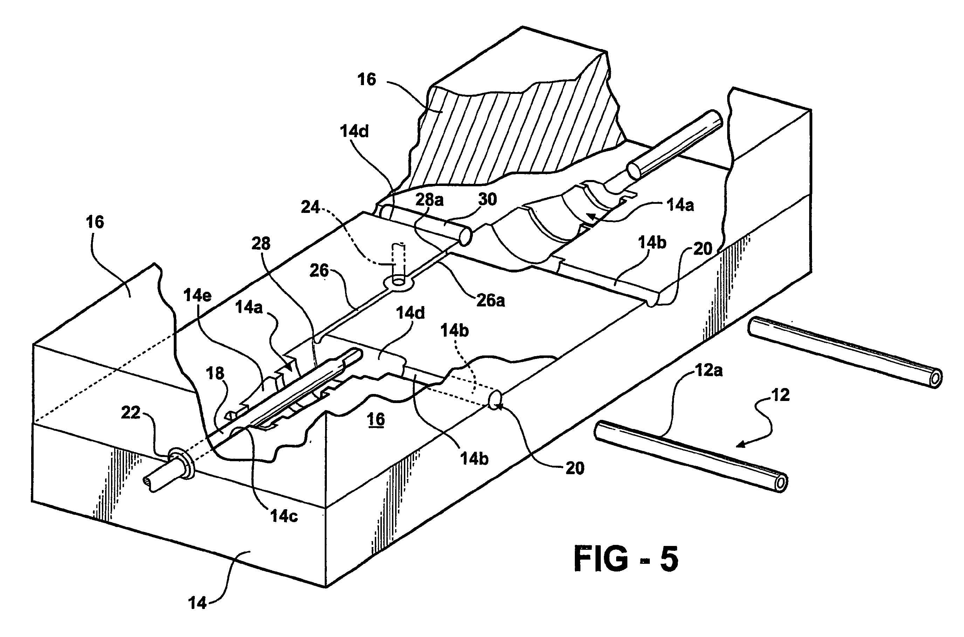

The manner in which the connector 10 is moulded onto the tube end portion 12 is best understood with reference to figures 5 and 6.

The moulding apparatus utilised to mould the connector 10 onto the end portion of the tube 12, broadly considered, includes a lower die or mould half 14, an upper die or mould half 16, and an axial core 18. Lower die 14 defines the lower half 14a of a mould cavity, a semi circular lower groove half 14b sized to receive tube 12, and a semi circular lower groove half 14c sized to receive axial core 18. It will be understood that upper die 16 includes a complimentary upper half of the mould cavity and complimentary upper groove halves coacting with the mould cavity 14a and the semicircular grooves 14b and 14c to form the total mould cavity, a cylindrical bore 20 for slideable receipt of a tube end portion 12a, and a cylindrical bore 22 for slideable receipt of axial core 18.

The mould apparatus, in known manner, further includes a sprue 24, a runner 26 extending from the lower end of the sprue to the mould cavity, and a gate 28 at the entry of the runner 26 into the mould cavity.

Axial core 18 (see also Figure 7) includes a cylindrical main body portion 18a slidably received in bore 22 and a flat inboard end portion 18b defining a flat sealing surface 18c and connected to the main body portion 18a by chamfered surfaces 18d and 18e.

In the use of the mould apparatus to form the connector 10 on the tube end portion 12a, a tube 12 is positioned in the groove 14b of the lower die to position the tube end portion 12a in the mould cavity; axial core 18 is positioned in the groove 14c with tip portion 18b overlying the open end of the tube and sealing surface 18c sealingly engaging the annular end portion 12b of the tube; the upper die is positioned over the lower die; molten plastic material (such for example as glass reinforced Nylon 12) is supplied to sprue 24 for passage through runner 26 and through gate 28 into the mould cavity to fill the mould cavity in surrounding relation to the tube end portion 12a and the axial core; and following setting of the plastic material, the upper die is removed from the lower die and the axial core 18 is removed. This moulding procedure forms a connector 10 fixedly secured to the tube end portion 12a and having an axial bore 10f communicating with the open end of the tube, extending at a right angle to the central axis of the tube end portion, and conforming to the configuration of the core.

With continued reference to Figures 5 and 6, it will be seen that the mould cavity 14a includes a first annular portion 14d in surrounding relation to the received tube end portion and defining the tubular portion 10a of the connector and a second annular portion 14e extending at a right angle to the first portion in surrounding relation to the received core and defining the main body portion 10b and the fitting portion 10c of the connector. It will further be seen that the bore 20 slidably receiving the tube end portion opens at its inboard end in cavity portion 14d and the bore 22 slidably receiving the axial core opens at its inboard end in cavity portion 14e.

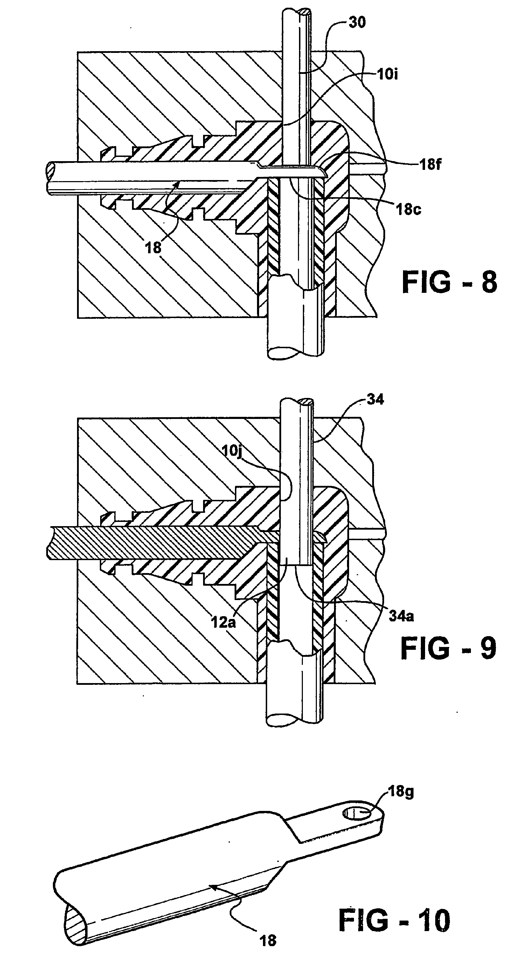

In the modified form of mould apparatus seen in Figure 8 the mould apparatus further includes a side or lateral core 30 positioned in a groove 14d in the lower die for sliding movement in a bore defined between the upper and lower dies coaxial with the bore 20.

It will be seen that the mould apparatus shown in Figure 5 is intended to simultaneously form two connector members (utilising a further runner 26a and a further gate 28a) and that, for purposes of illustration, the left or lower portion of the mould apparatus in Figure 5 has been illustrated to show the methodology of Figure 6 and the right or upper half of the mould apparatus in Figure 5 has been configured to show the methodology of Figure 8 utilising the auxiliary or side core 30.

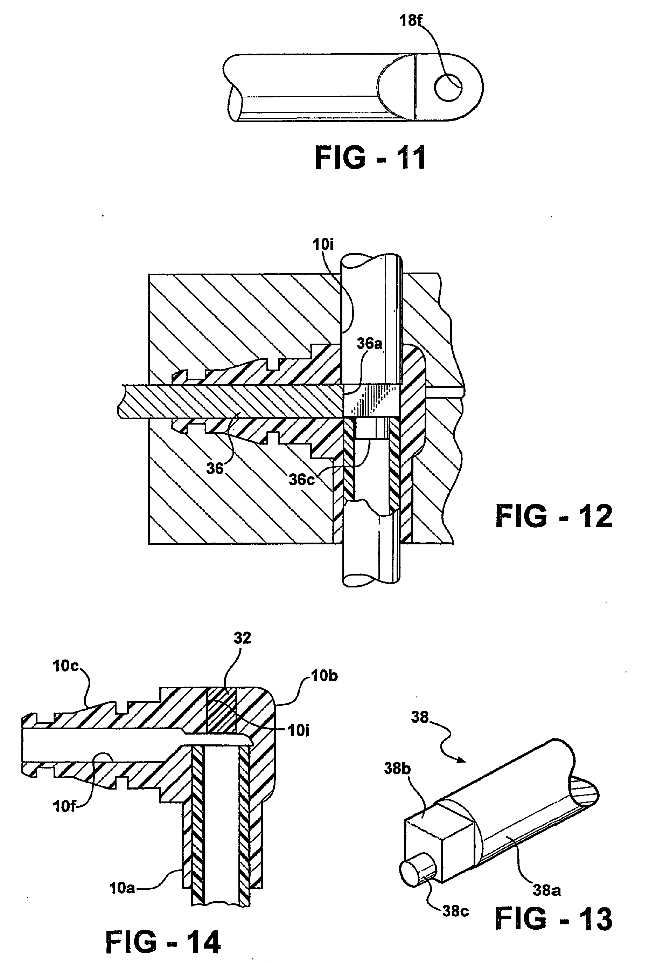

The methodology utilising the mould apparatus in Figure 8 is identical to the methodology utilising the mould apparatus of Figure 6 with the exception that the side core 30 is positioned against the face 18f of the inboard end 18b of the axial core during the injection moulding operation to insure that the surface 18c of the inboard end of the axial core remains in firm sealing engagement with the annular end 12b of the tube end portion to preclude the entry of molten plastic material into the interior of the tube. Following the setting of the plastic material and removal of the upper die, axial core, and the side core, the aperture 10i formed in the connector 10 by virtue of the side core 30 is filled with a plug 32 (Figure 14) formed of a material identical to or similar to the material used in the injection moulding process.

In the modified form of mould apparatus seen in Figures 9 and 10, the inboard end 18b of the axial core includes a central core aperture 18g and the side core 34 is sized to pass through the aperture 18g for entry into the open end of tube end portion 12a whereby the inboard end 34a of the side core coacts with the end portion of the axial core to preclude the entry of molten plastic material into the open end of the tube. As with the Figure 8 embodiment, following removal of the upper die and the axial and side cores, a plug 32 is positioned in the bore 10i in the connector formed by the side core 34.

In the modified form of mould apparatus seen in Figure 12 and 13, the axial core 36 comprises a cylindrical bar having a flat circular end 36a and the side core 38 includes a cylindrical portion 38a for sliding receipt in the cylindrical bore defined by the upper and lower dies, a portion of square cross-section defining flats 38b, and a cylindrical inboard plug portion 38c. In use, a flat 38b on the square cross-section portion of the side core coacts with the flat end 36a of the cylindrical core 36 and the plug portion 36c is received in the open end of the tube end portion to preclude the entry of molten plastic into the tube end portion. As with the Figures 8 and 10 embodiments, a plug 32 is positioned in the bore 10i defined in the connector by the side core.

It will be seen that, in the finished product, and irrespective of the mould methodology employed, the connector includes a tubular portion 10a fixedly secured over the end portion 12a of the tube, a main body portion 10b of generally circular configuration conforming to the corresponding portion of the mould cavity, and a fitting portion 10c conforming to the corresponding portion of the mould cavity and having a central bore communicating with the open end of the tube, extending at right angles to the central axis of the tube end portion, and conforming to the configuration of the core or cores.

The invention apparatus and methodology will be seen to provide a quick, inexpensive and effective means of providing a right angle fitting on a tube.

## Claims

1. A method of forming a right angle connector (10) at an end portion (12a) of a tube (12), including the steps of:
positioning the tube end portion (12a) in a mould cavity (14a) of a die assembly (14, 16) of a mould apparatus, the tube end portion (12a) having an open end;
positioning an axially extending core (18) in the mould cavity (14a) with the axis of the core (18) at a right angle to the axis of the tube end portion (12a), the core (18) having an inboard end (18b) positioned proximate the open end of the tube end portion;
injecting a molten plastics material into the mould cavity (14a) in surrounding relation to the core (18) and the tube end portion (12a); and
removing the core (18) to form a connector (10) fixedly secured to the tube end portion (12a) and having a central axial bore (10f) communicating with the open end of the tube (12), extending at a right angle to the central axis of the tube end portion (12a), and conforming to the configuration of the core (18);
wherein the inboard end (18b) of the core (18) is positioned over and seals off the open end of the tube (12) during moulding of the connector (10).

2. The method according to claim 1, wherein the mould apparatus further includes a laterally extending side core (30) which bears against the inboard end (18b) of the axial core (18) to maintain the inboard end (18b) in firm sealing engagement with the open end of the tube end portion (12a) during the moulding of the connector (10).

3. A method of forming a right angle connector (10) at an end portion (12a) of a tube (12), including the steps of:
positioning the tube end portion (12a) in a mould cavity (14a) of a die assembly (14, 16) of a mould apparatus, the tube end portion (12a) having an open end;
positioning an axially extending core (18) in the mould cavity (14a) with the axis of the core (18) at a right angle to the axis of the tube end portion (12a), the core (18) having an inboard end (18b) positioned proximate the open end of the tube end portion;
injecting a molten plastics material into the mould cavity (14a) in surrounding relation to the core (18) and the tube end portion (12a); and
removing the core (18) to form a connector (10) fixedly secured to the tube end portion (12a) and having a central axial bore (10f) communicating with the open end cf the tube (12), extending at a right angle to the central axis of the tube end portion (12a), and conforming to the configuration of the core (18);
wherein the mould apparatus further includes a laterally extending side core (34) which passes through an aperture (18g) in the inboard end (18b) of the axial core (18) for positioning in the open end of the tube end portion (12a).

4. A method of forming a right angle connector (10) at an end portion (12a) of a tube (12), including the steps of:
positioning the tube end portion (12a) in a mould cavity (14a) of a die assembly (14, 16) of a mould apparatus, the tube end portion (12a) having an open end;
positioning an axially extending core (36) in the mould cavity (14a) with the axis of the core (36) at a right angle to the axis of the tube end portion (12a), the core (36) having an inboard end (36a) positioned proximate the open end of the tube end portion;
injecting a molten plastics material into the mould cavity (14a) in surrounding relation to the core (36) and the tube end portion (12a); and
removing the core (36) to form a connector (10) fixedly secured to the tube end portion (12a) and having a central axial bore (10f) communicating with the open end cf the tube (12), extending at a right angle to the central axis of the tube end portion (12a), and conforming to the configuration of the core (36);
wherein the mould apparatus further includes a laterally extending side core (38) which includes a portion (38b) abutting against the inboard end (36a) of the axial core (36) and a further plug portion (38c) extending into the open end of the tube end portion (12a).

5. The method according to any one of claims 2 to 4, in which following removal of the side core (30, 34, 38) a plug (32) of plastics material is inserted into an aperture (10i) in the connector (10) left by removal of the side core (30, 34, 38).

6. The method according to any one of the preceding claims, wherein the mould cavity (14a) includes a first portion (14d), sized to receive the tube end portion (12a) and defining an annular space around the received tube end portion (12a), and a second portion (14e) extending at a right angle to the first portion (14d), sized to receive the core (18, 36), and defining an annular space around the received core (18, 36).

7. The method according to claim 6, wherein the die assembly (14, 16) further defines a first bore (20) opening at an inboard end thereof into the first mould cavity portion (14d) and sized to slidably receive the tube end portion (12a) and a second bore (22) extending at right angles to the first bore (20), opening at an inboard end thereof in the second mould cavity portion (14e), and sized to slidably receive the core (18, 36).

8. A mould apparatus for moulding a right angle connector (10) onto the end portion (12a) of a tube (12), the mould apparatus comprising:
a die assembly (14, 16) defining a central mould cavity (14a) having a first portion (14d) and a second portion (14e) extending at a right angle to the first portion (14d), a first bore (20) opening at an inboard end thereof into the first cavity portion (14d) and sized to slidably receive the tube (12) with the tube end portion (12a) projecting into the first cavity portion (14d) and defining an annular cavity space in surrounding relation to the tube end portion (12a), the tube end portion (12a) having an open end, and a second bore (22) extending at a right angle to the first bore (20) and opening at an inboard end thereof into the second cavity portion (14e); and
an axial core (18) slidably received in the second bore (22) and projecting into the second cavity portion (14e) to define an annular connector forming cavity space in surrounding relation to the core (18), the core (18) having an inboard end (18b) for positioning proximate the open end of the tube end portion;
wherein the inboard end (18b) of the axial core (18) defines a flat sealing surface (18c) adapted to be positioned over and seal the open end of the tube end portion (12a) whereby to preclude the entry of molten material into the open end of the tube end portion (12a) during the moulding of the connector (10).

9. The mould apparatus according to claim 8, wherein the mould apparatus further includes a side core (30) projecting laterally into the mould cavity (14a) at a right angle to the axial core (18) and engaging a surface (18f) on the inboard end (18b) of the axial core (18) opposite to the sealing surface (18c) whereby to press the sealing surface (18c) into firm engagement with the open end of the tube end portion (12a).

10. A mould apparatus for moulding a right angle connector (10) onto the end portion (12a) of a tube (12), the mould apparatus comprising:
a die assembly (14, 16) defining a central mould cavity (14a) having a first portion (14d) and a second portion (14e) extending at a right angle to the first portion (14d), a first bore (20) opening at an inboard end thereof into the first cavity portion (14d) and sized to slidably receive the tube (12) with the tube end portion (12a) projecting into the first cavity portion (14d) and defining an annular cavity space in surrounding relation to the tube end portion (12a), the tube end portion (12a) having an open end, and a second bore (22) extending at a right angle to the first bore (20) and opening at an inboard end thereof into the second cavity portion (14e); and
an axial core (18) slidably received in the second bore (22) and projecting into the second cavity portion (14e) to define an annular connector forming cavity space in surrounding relation to the core (18), the core (18) having an inboard end (18b) for positioning proximate the open end of the tube end portion;
wherein the mould apparatus further includes a side core (34) projecting laterally into the mould cavity (14a) at a right angle to the axial core (18) and passing through an aperture (18g) in the inboard end portion (18b) of the axial core (18) for receipt in the open end of the tube end portion (12a).

11. A mould apparatus for moulding a right angle connector (10) onto the end portion (12a) of a tube (12), the mould apparatus comprising:
a die assembly (14, 16) defining a central mould cavity (14a) having a first portion (14d) and a second portion (14e) extending at a right angle to the first portion (14d), a first bore (20) opening at an inboard end thereof into the first cavity portion (14d) and sized to slidably receive the tube (12) with the tube end portion (12a) projecting into the first cavity portion (14d) and defining an annular cavity space in surrounding relation to the tube end portion (12a), the tube end portion (12a) having an open end, and a second bore (22) extending at a right angle to the first bore (20) and opening at an inboard end thereof into the second cavity portion (14e); and
an axial core (36) slidably received in the second bore (22) and projecting into the second cavity portion (14e) to define an annular connector forming cavity space in surrounding relation to the core (36), the core (36) having an inboard end (36a) for positioning proximate the open end of the tube end portion;
wherein the mould apparatus further includes a side core (38) projecting laterally into the mould cavity (14a) at a right angle to the axial core (36) and including a first portion defining a flat surface (38b) engaging the inboard end (36a) of the axial core (36) and a second plug portion (38c) extending into the open end of the tube end portion (12a).

## Patentansprüche

1. Verfahren zur Ausbildung eines rechtwinkligen Steckanschlusses (10) an einem Endabschnitt (12a) eines Rohrs (12), umfassend die folgenden Schritte:
Positionieren des Rohr-Endabschnitts (12a) in einer Formhöhlung (14a) einer Spritzguß-Baugruppe (14, 16) einer Formvorrichtung, wobei der Rohr-Endabschnitt (12a) ein offenes Ende hat;
Positionieren eines sich axial erstreckenden Kerns (18) in der Formhöhlung (14a) mit der Achse des Kerns (18) in einem rechten Winkel zu der Achse des Rohr-Endabschnitts (12a), wobei der Kern (18) ein nach innen gerichtetes Ende (18b) hat, das nahe dem offenen Ende des Rohr-Endabschnitts positioniert ist;
Einspritzen eines geschmolzenen Kunststoffmaterials in die Formhöhlung (14a) in umgebender Beziehung zu dem Kern (18) und dem Rohr-Endabschnitt (12a); und
Entfernen des Kerns (18), um einen Steckanschluß (10) auszubilden, der fest an dem Rohr-Endabschnitt (12a) gesichert ist und eine mit dem offenen Ende des Rohrs (12) in Verbindung stehende mittlere axiale Bohrung (10f) hat, die sich in einem rechten Winkel zu der mittleren Achse des Rohr-Endabschnitts (12a) erstreckt, und an die Konfiguration des Kerns (18) angepaßt ist;
wobei das nach innen gerichtete Ende (18b) des Kerns (18) während des Formens des Steckanschlusses (10) über dem offenen Ende des Rohrs (12) positioniert wird und dieses abdichtet.

2. Verfahren nach Anspruch 1, bei welchem die Formvorrichtung ferner einen sich seitlich erstreckenden Seitenkern (30) umfaßt, welcher sich auf dem nach innen gerichteten Ende (18b) des axialen Kerns (18) abstützt, um das nach innen gerichtete Ende (18b) während des Formens des Steckanschlusses (10) in fester abdichtender Anlage mit dem offenen Ende des Rohr-Endabschnitts (12a) zu halten.

3. Verfahren zur Ausbildung eines rechtwinkligen Steckanschlusses (10) an einem Endabschnitt (12a) eines Rohrs (12), umfassend die folgenden Schritte:
Positionieren des Rohr-Endabschnitts (12a) in einer Formhöhlung (14a) einer Spritzguß-Baugruppe (14, 16) einer Formvorrichtung, wobei der Rohr-Endabschnitt (12a) ein offenes Ende hat;
Positionieren eines sich axial erstreckenden Kerns (18) in der Formhöhlung (14a) mit der Achse des Kerns (18) in einem rechten Winkel zu der Achse des Rohr-Endabschnitts (12a), wobei der Kern (18) ein nach innen gerichtetes Ende (18b) hat, das nahe dem offenen Ende des Rohr-Endabschnitts positioniert ist;
Einspritzen eines geschmolzenen Kunststoffmaterials in die Formhöhlung (14a) in umgebender Beziehung zu dem Kern (18) und dem Rohr-Endabschnitt (12a); und
Entfernen des Kerns (18), um einen Steckanschluß (10) auszubilden, der fest an dem Rohr-Endabschnitt (12a) gesichert ist und eine mit dem offenen Ende des Rohrs (12) in Verbindung stehende mittlere axiale Bohrung (10f) hat, die sich in einem rechten Winkel zu der mittleren Achse des Rohr-Endabschnitts (12a) erstreckt, und an die Konfiguration des Kerns (18) angepaßt ist;
wobei die Formvorrichtung ferner einen sich seitlich erstreckenden Seitenkern (34) umfaßt, welcher zur Positionierung in dem offenen Ende des Rohr-Endabschnitts (12a) durch eine Öffnung (18g) in dem nach innen gerichteten Ende (18b) des axialen Kerns (18) hindurch verläuft.

4. Verfahren zur Ausbildung eines rechtwinkligen Steckanschlusses (10) an einem Endabschnitt (12a) eines Rohrs (12), umfassend die folgenden Schritte:
Positionieren des Rohr-Endabschnitts (12a) in einer Formhöhlung (14a) einer Spritzguß-Baugruppe (14, 16) einer Formvorrichtung, wobei der Rohr-Endabschnitt (12a) ein offenes Ende hat;
Positionieren eines sich axial erstreckenden Kerns (36) in der Formhöhlung (14a) mit der Achse des Kerns (36) in einem rechten Winkel zu der Achse des Rohr-Endabschnitts (12a), wobei der Kern (36) ein nach innen gerichtetes Ende (36b) hat, das nahe dem offenen Ende des Rohr-Endabschnitts positioniert ist;
Einspritzen eines geschmolzenen Kunststoffmaterials in die Formhöhlung (14a) in umgebender Beziehung zu dem Kern (36) und dem Rohr-Endabschnitt (12a); und
Entfernen des Kerns (36), um einen Steckanschluß (10) auszubilden, der fest an dem Rohr-Endabschnitt (12a) gesichert ist und eine mit dem offenen Ende des Rohrs (12) in Verbindung stehende mittlere axiale Bohrung (10f) hat, die sich in einem rechten Winkel zu der mittleren Achse des Rohr-Endabschnitts (12a) erstreckt, und an die Konfiguration des Kerns (36) angepaßt ist;
wobei die Formvorrichtung ferner einen sich seitlich erstreckenden Seitenkern (38) umfaßt, welcher einen Abschnitt (38b), der an dem nach innen gerichteten Ende (36a) des axialen Kerns (36) anliegt, und einen weiteren Einsteckabschnitt (38c) umfaßt, der sich in das offene Ende des Rohr-Endabschnitts (12a) erstreckt.

5. Verfahren nach einem der Ansprüche 2 bis 4, bei welchem auf das Entfernen des Seitenkerns (30, 34, 38) folgend ein Stöpsel (32) aus Kunststoffmaterial in eine Öffnung (10i) in dem Steckanschluß (10) eingesetzt wird, die durch das Entfernen des Seitenkerns (30, 34, 38) verblieben ist.

6. Verfahren nach einem der vorhergehenden Ansprüche, bei welchem die Formhöhlung (14a) einen ersten Abschnitt (14d), der eine Größe hat, um den Rohr-Endabschnitt (12a) aufzunehmen, und einen ringförmigen Raum rund um den aufgenommenen Rohr-Endabschnitt (12a) definiert, und einen zweiten Abschnitt (14e) umfaßt, der sich in einem rechten Winkel zu dem ersten Abschnitt (14d) erstreckt, eine Größe hat, um den Kern (18, 36) aufzunehmen, und einen ringförmigen Raum rund um den aufgenommenen Kern (18, 36) definiert.

7. Verfahren nach Anspruch 6, bei welchem die Spritzguß-Baugruppe (14, 16) ferner eine erste Bohrung (20), die sich an einem nach innen gerichteten Ende von dieser in den ersten Formhöhlungsabschnitt (14d) öffnet und eine Größe hat, um den Rohr-Endabschnitt (12a) verschiebbar aufzunehmen, und eine zweite Bohrung (22) definiert, die sich in einem rechten Winkel zu der ersten Bohrung (20) erstreckt, sich an einem nach innen gerichteten Ende von dieser in den zweiten Formhöhlungsabschnitt (14e) öffnet und eine Größe hat, um den Kern (18, 36) verschiebbar aufzunehmen.

8. Formvorrichtung zum Formen eines rechtwinkligen Steckanschlusses (10) auf den Endabschnitt (12a) eines Rohrs (12), wobei die Formvorrichtung umfaßt:
eine Spritzguß-Baugruppe (14, 16), welche eine mittlere Formhöhlung (14a), die einen ersten Abschnitt (14d) und einen zweiten Abschnitt (14e) hat, der sich in einem rechten Winkel zu dem ersten Abschnitt (14d) erstreckt, welche eine erste Bohrung (20), die sich an einem nach innen gerichteten Ende von dieser in den ersten Höhlungsabschnitt (14d) öffnet und eine Größe hat, um das Rohr (12) verschiebbar aufzunehmen, wobei der Rohr-Endabschnitt (12a) in den ersten Höhlungsabschnitt (14d) hinein vorsteht, und die einen ringförmigen Höhlungsraum in umgebender Beziehung zu dem Rohr-Endabschnitt (12a) definiert, wobei der Rohr-Endabschnitt (12a) ein offenes Ende hat, und welche eine zweite Bohrung (22) definiert, die sich in einem rechten Winkel zu der ersten Bohrung (20) erstreckt und sich an einem nach innen gerichteten Ende von dieser in den zweiten Höhlungsabschnitt (14e) öffnet; und
einen axialen Kern (18), der verschiebbar in der zweiten Bohrung (22) aufgenommen ist und in den zweiten Höhlungsabschnitt (14e) vorsteht, um einen ringförmigen, den Steckanschluß ausbildenden Höhlungsraum in umgebender Beziehung zu dem Kern (18) zu definieren, wobei der Kern (18) ein nach innen gerichtetes Ende (18b) zur Positionierung nahe dem offenen Ende des Rohr-Endabschnitts hat;
wobei das nach innen gerichtete Ende (18b) des axialen Kerns (18) eine flache Dichtfläche (18c) definiert, die dazu angepaßt ist, über dem offenen Ende des Rohr-Endabschnitts (12a) positioniert zu werden und dieses abzudichten, wodurch der Eintritt von geschmolzenem Material in das offene Ende des Rohr-Endabschnitts (12a) während des Formens des Steckanschlusses (10) verhindert wird.

9. Formvorrichtung nach Anspruch 8, wobei die Formvorrichtung ferner einen Seitenkern (30) umfaßt, der seitlich in die Formhöhlung (14a) in einem rechten Winkel zu dem axialen Kern (18) hinein vorsteht und an einer Fläche (18f) an dem nach innen gerichteten Ende (18b) des axialen Kerns (18) gegenüber der Dichtfläche (18c) anliegt, wodurch die Dichtfläche (18c) in feste Anlage mit dem offenen Ende des Rohr-Endabschnitts (12a) gedrückt wird.

10. Formvorrichtung zum Formen eines rechtwinkligen Steckanschlusses (10) auf den Endabschnitt (12a) eines Rohrs (12), wobei die Formvorrichtung umfaßt:
eine Spritzguß-Baugruppe (14, 16), welche eine mittlere Formhöhlung (14a), die einen ersten Abschnitt (14d) und einen zweiten Abschnitt (14c) hat, der sich in einem rechten Winkel zu dem ersten Abschnitt (14d) erstreckt, welche eine erste Bohrung (20), die sich an einem nach innen gerichteten Ende von dieser in den ersten Höhlungsabschnitt (14d) öffnet und eine Größe hat, um das Rohr (12) verschiebbar aufzunehmen, wobei der Rohr-Endabschnitt (12a) in den ersten Höhlungsabschnitt (14d) hinein vorsteht, und die einen ringförmigen Höhlungsraum in umgebender Beziehung zu dem Rohr-Endabschnitt (12a) definiert, wobei der Rohr-Endabschnitt (12a) ein offenes Ende hat, und welche eine zweite Bohrung (22) definiert, die sich in einem rechten Winkel zu der ersten Bohrung (20) erstreckt und sich an einem nach innen gerichteten Ende von dieser in den zweiten Höhlungsabschnitt (14e) öffnet; und
einen axialen Kern (18), der verschiebbar in der zweiten Bohrung (22) aufgenommen ist und in den zweiten Höhlungsabschnitt (14e) vorsteht, um einen ringförmigen, den Steckanschluß ausbildenden Höhlungsraum in umgebender Beziehung zu dem Kern (18) zu definieren, wobei der Kern (18) ein nach innen gerichtetes Ende (18b) zur Positionierung nahe dem offenen Ende des Rohr-Endabschnitts hat;
wobei die Formvorrichtung ferner einen Seitenkern (34) umfaßt, der seitlich in die Formhöhlung (14a) in einem rechten Winkel zu dem axialen Kern (18) hervorsteht und zur Aufnahme in dem offenen Ende des Rohr-Endabschnitts (12a) durch eine Öffnung (18g) in dem nach innen gerichteten Endabschnitt (18b) des axialen Kerns (18) hindurch verläuft.

11. Formvorrichtung zum Formen eines rechtwinkligen Steckanschlusses (10) auf den Endabschnitt (12a) eines Rohrs (12), wobei die Formvorrichtung umfaßt:
eine Spritzguß-Baugruppe (14, 16), welche eine mittlere Formhöhlung (14a), die einen ersten Abschnitt (14d) und einen zweiten Abschnitt (14e) hat, der sich in einem rechten Winkel zu dem ersten Abschnitt (14d) erstreckt, welche eine erste Bohrung (20), die sich an einem nach innen gerichteten Ende von dieser in den ersten Höhlungsabschnitt (14d) öffnet und eine Größe hat, um das Rohr (12) verschiebbar aufzunehmen, wobei der Rohr-Endabschnitt (12a) in den ersten Höhlungsabschnitt (14d) hinein vorsteht, und die einen ringförmigen Höhlungsraum in umgebender Beziehung zu dem Rohr-Endabschnitt (12a) definiert, wobei der Rohr-Endabschnitt (12a) ein offenes Ende hat, und welche eine zweite Bohrung (22) definiert, die sich in einem rechten Winkel zu der ersten Bohrung (20) erstreckt und sich an einem nach innen gerichteten Ende von dieser in den zweiten Höhlungsabschnitt (14e) öffnet; und
einen axialen Kern (36), der verschiebbar in der zweiten Bohrung (22) aufgenommen ist und in den zweiten Höhlungsabschnitt (14e) vorsteht, um einen ringförmigen, den Steckanschluß ausbildenden Höhlungsraum in umgebender Beziehung zu dem Kern (36) zu definieren, wobei der Kern (36) ein nach innen gerichtetes Ende (36a) zur Positionierung nahe dem offenen Ende des Rohr-Endabschnitts hat;
wobei die Formvorrichtung ferner einen Seitenkern (38) umfaßt, der seitlich in die Formhöhlung (14a) in einem rechten Winkel zu dem axialen Kern (36) hervorsteht und einen ersten Abschnitt umfaßt, der eine flache Fläche (38b), die an dem nach innen gerichteten Ende (36a) des axialen Kerns (36) anliegt, und einen zweiten Einsteckabschnitt (38c) definiert, der sich in das offene Ende des Rohr-Endabschnitts (12a) hinein erstreckt.

## Revendications

1. Procédé de formation d'un connecteur à angle droit (10) à une partie d'extrémité (12a) d'un tube (12), comportant les étapes consistant à :
positionner la partie d'extrémité de tube (12a) dans une cavité de moule (14a) d'un ensemble de filière (14, 16) d'un appareil de moulage, la partie d'extrémité de tube (12a) présentant une extrémité ouverte ;
positionner un noyau s'étendant axialement (18) dans la cavité de moule (14a) avec l'axe du noyau (18) à angle droit par rapport à l'axe de la partie d'extrémité de tube (12a), le noyau (18) présentant une extrémité intérieure (18b) positionnée à proximité de l'extrémité ouverte de la partie d'extrémité de tube ;
injecter une matière plastique fondue à l'intérieur de la cavité de moule (14a) dans une relation entourant le noyau (18) et la partie d'extrémité de tube (12a) ; et
retirer le noyau (18) pour former un connecteur (10) fixé solidement à la partie d'extrémité de tube (12a) et présentant un alésage axial central (10f) communiquant avec l'extrémité ouverte du tube (12), s'étendant à angle droit par rapport à l'axe central de la partie d'extrémité de tube (12a), et se conformant à la configuration du noyau (18) ;
dans lequel l'extrémité intérieure (18b) du noyau (18) est positionnée au-dessus de l'extrémité ouverte du tube (12) et l'étanchéifie pendant le moulage du connecteur (10).

2. Procédé selon la revendication 1, dans lequel l'appareil de moulage comporte en outre un noyau latéral s'étendant latéralement (30) qui s'appuie contre l'extrémité intérieure (18b) du noyau axial (18) pour maintenir l'extrémité intérieure (18b) en mise en prise d'étanchéité ferme avec l'extrémité ouverte de la partie d'extrémité cde tube (12a) pendant le moulage du connecteur (10).

3. Procédé de formation d'un connecteur à angle droit (10) à une partie d'extrémité (12a) d'un tube (12), comportant les étapes consistant à :
positionner la partie d'extrémité de tube (12a) dans une cavité de moule (14a) d'un ensemble de filière (14, 16) d'un appareil de moulage, la partie d'extrémité de tube (12a) présentant une extrémité ouverte ;
positionner un noyau s'étendant axialement (18) dans la cavité de moule (14a) avec l'axe du noyau (18) à angle droit par rapport à l'axe de la partie d'extrémité de tube (12a), le noyau (18) présentant une extrémité intérieure (18b) positionnée à proximité de l'extrémité ouverte de la partie d'extrémité de tube ;
injecter une matière plastique fondue à l'intérieur de la cavité de moule (14a) dans une relation entourant le noyau (18) et la partie d'extrémité de tube (12a) ; et
retirer le noyau (18) pour former un connecteur (10) fixé solidement à la partie d'extrémité de tube (12a) et présentant un alésage axial central (10f) communiquant avec l'extrémité ouverte du tube (12), s'étendant à angle droit par rapport à l'axe central de la partie d'extrémité de tube (12a), et se conformant à la configuration du noyau (18) ;
dans lequel l'appareil de moulage comporte en outre un noyau latéral s'étendant latéralement (34) qui passe à travers une ouverture (18g) dans l'extrémité intérieure (18b) du noyau axial (18) pour être positionné dans l'extrémité ouverte de la partie d'extrémité de tube (12a).

4. Procédé de formation d'un connecteur à angle droit (10) à une partie d'extrémité (12a) d'un tube (12), comportant les étapes consistant à :
positionner la partie d'extrémité de tube (12a) dans une cavité de moule (14a) d'un ensemble de filière (14, 16) d'un appareil de moulage, la partie d'extrémité de tube (12a) présentant une extrémité ouverte ;
positionner un noyau s'étendant axialement (36) dans la cavité de moule (14a) avec l'axe du noyau (36) à angle droit par rapport à l'axe de la partie d'extrémité de tube (12a), le noyau (36) présentant une extrémité intérieure (36a) positionnée à proximité de l'extrémité ouverte de la partie d'extrémité de tube ;
injecter une matière plastique fondue à l'intérieur de la cavité de moule (14a) dans une relation entourant le noyau (36) et la partie d'extrémité de tube (12a) ; et
retirer le noyau (36) pour former un connecteur (10) fixé solidement à la partie d'extrémité de tube (12a) et présentant un alésage axial central (10f) communiquant avec l'extrémité ouverte du tube (12), s'étendant à angle droit par rapport à l'axe central de la partie d'extrémité de tube (12a), et se conformant à la configuration du noyau (36) ;
dans lequel l'appareil de moulage comporte en outre un noyau latéral s'étendant latéralement (38) qui comporte une partie (38b) en butée contre l'extrémité intérieure (36a) du noyau axial (36) et une autre partie de fiche (38c) s'étendant à l'intérieur de l'extrémité ouverte de la partie d'extrémité de tube (12a).

5. Procédé selon l'une quelconque des revendications 2 à 4, dans lequel après le retrait du noyau latéral (30, 34, 38) une fiche (32) en matière plastique est insérée à l'intérieur d'une ouverture (10i) dans le connecteur (10) laissé par le retrait du noyau latéral (30, 34, 38).

6. Procédé selon l'une quelconque des revendications précédentes, dans lequel la cavité de moule (14a) comporte une première partie (14d), dimensionnée pour recevoir la partie d'extrémité de tube (12a) et définissant un espace annulaire autour de la partie d'extrémité de tube (12a) reçue, et une seconde partie (14e) s'étendant à angle droit par rapport à la première partie (14d), dimensionnée pour recevoir le noyau (18, 36), et définissant un espace annulaire autour du noyau reçu (18, 36).

7. Procédé selon la revendication 6, dans lequel l'ensemble de filière (14, 16) définit en outre un premier alésage (20) s'ouvrant à une de ses extrémités intérieures dans la première partie de cavité de moule (14d) et dimensionné pour recevoir de manière coulissante la partie d'extrémité de tube (12a) et un second alésage (22) s'étendant à angle droit par rapport au premier alésage (20), s'ouvrant à une de ses extrémités intérieures dans la seconde partie de cavité de moule (14e), et dimensionné pour recevoir de manière coulissante le noyau (18, 36).

8. Appareil de moulage destiné à mouler un connecteur à angle droit (10) sur la partie d'extrémité (12a) d'un tube (12), l'appareil de moulage comprenant :
un ensemble de filière (14, 16) définissant une cavité de moule centrale (14a) présentant une première partie (14d) et une seconde partie (14e) s'étendant à angle droit par rapport à la première partie (14d), un premier alésage (20) s'ouvrant à une de ses extrémités intérieures à l'intérieur de la première partie de cavité (14d) et dimensionné pour recevoir de manière coulissante le tube (12) avec la partie d'extrémité de tube (12a) se projetant à l'intérieur de la première partie de cavité (14d) et définissant un espace de cavité annulaire dans une relation entourant la partie d'extrémité de tube (12a), la partie d'extrémité de tube (12a) présentant une extrémité ouverte, et un second alésage (22) s'étendant à angle droit par rapport au premier alésage (20) et s'ouvrant à une de ses extrémités intérieures dans la seconde partie de cavité (14e) ; et
un noyau axial (18) reçu de manière coulissante dans le second alésage (22) et se projetant à l'intérieur de la seconde partie de cavité (14e) pour définir un espace de cavité formant connecteur annulaire dans une relation entourant le noyau (18), le noyau (18) présentant une extrémité intérieure (18b) pour être positionné à proximité de l'extrémité ouverte de la partie d'extrémité de tube ;
dans lequel l'extrémité intérieure (18b) du noyau axial (18) définit une surface d'étanchéité plate (18c) adaptée pour être positionnée au-dessus de l'extrémité ouverte de la partie d'extrémité de tube (12a) et l'étanchéifier pour empêcher l'entrée du matériau fondu' à l'intérieur de l'extrémité ouverte de la partie d'extrémité de tube (12a) pendant le moulage du connecteur (10).

9. Appareil de moulage selon la revendication 8, dans lequel l'appareil de moulage comporte en outre un noyau latéral (30) se projetant latéralement à l'intérieur de la cavité de moule (14a) à angle droit par rapport au noyau axial (18) et se mettant en prise avec une surface (18f) sur l'extrémité intérieure (18b) du noyau axial (18) à l'opposé de la surface d'étanchéité (18c) pour presser de ce fait la surface d'étanchéité (18c) en mise en prise ferme avec l'extrémité ouverte de la partie d'extrémité de tube (12a).

10. Appareil de moulage d'un connecteur à angle droit (10) sur la partie d'extrémité (12a) d'un tube (12), l'appareil de moulage comprenant :
un ensemble de filière (14, 16) définissant une cavité de moule centrale (14a) présentant une première partie (14d) et une seconde partie (14e) s'étendant à angle droit par rapport à la première partie (14d), un premier alésage (20) s'ouvrant à une de ses extrémités intérieures dans la première partie de cavité (14d) et dimensionné pour recevoir de manière coulissante le tube (12) avec la partie d'extrémité de tube (12a) se projetant à l'intérieur de la première partie de cavité (14d) et définissant un espace de cavité annulaire dans une relation entourant la partie d'extrémité de tube (12a), la partie d'extrémité de tube (12a) présentant une extrémité ouverte, et un second alésage (22) s'étendant à angle droit par rapport au premier alésage (20) et s'ouvrant à une de ses extrémités intérieures dans la seconde partie de cavité (14e) ; et
un noyau axial (18) reçu de manière coulissante dans le second alésage (22) et se projetant à l'intérieur de la seconde partie de cavité (14e) pour définir un espace de cavité formant connecteur annulaire dans une relation entourant le noyau (18), le noyau (18) présentant une extrémité intérieure (18b) pour être positionné à proximité de l'extrémité ouverte de la partie d'extrémité de tube ;
dans lequel l'appareil de moulage comporte en outre un noyau latéral (34) se projetant latéralement à l'intérieur de la cavité de moule (14a) à angle droit par rapport au noyau axial (18) et passant à travers une ouverture (18g) dans la partie d'extrémité intérieure (18b) du noyau axial (18) pour être reçu dans l'extrémité ouverte de la partie d'extrémité de tube (12a).

11. Appareil de moulage destiné à mouler un connecteur à angle droit (10) sur la partie d'extrémité (12a) d'un tube (12), l'appareil de moulage comprenant :
un ensemble de filière (14, 16) définissant une cavité de moule centrale (14a) présentant une première partie (14d) et une seconde partie (14e) s'étendant à angle droit par rapport à la première partie (14d), un premier alésage (20) s'ouvrant à une de ses extrémités intérieures dans la première partie de cavité (14d) et dimensionné pour recevoir de manière coulissante le tube (12) avec la partie d'extrémité de tube (12a) se projetant à l'intérieur de la première partie de cavité (14d) et définissant un espace de cavité annulaire dans une relation entourant la partie d'extrémité de tube (12a), la partie d'extrémité de tube (12a) présentant une extrémité ouverte, et un second alésage (22) s'étendant à angle droit par rapport au premier alésage (20) et s'ouvrant à une de ses extrémités intérieures dans la seconde partie de cavité (14e) ; et
un noyau axial (36) reçu de manière coulissante dans le second alésage (22) et se projetant à l'intérieur de la seconde partie de cavité (14e) pour définir un espace de cavité formant connecteur annulaire dans une relation entourant le noyau (36), le noyau (36) présentant une extrémité intérieure (36a) pour être positionné à proximité de l'extrémité ouverte de la partie d'extrémité de tube ;
dans lequel l'appareil de moulage comporte en outre un noyau latéral (38) se projetant latéralement à l'intérieur de la cavité de moule (14a) à angle droit par rapport au noyau axial (36) et comportant une première partie définissant une surface plate (38b) se mettant en prise avec l'extrémité intérieure (36a) du noyau axial (36) et une seconde partie de fiche (38c) s'étendant à l'intérieur de l'extrémité ouverte de la partie d'extrémité de tube (12a).
